# EUROPEAN PATENT SPECIFICATION

(11) **EP 3 746 336 B1**
(45) Date of publication and mention of the grant of the patent: **16.07.2025**
(21) Application number: 19708233.2
(22) Date of filing: 30.01.2019
(51) Int. Cl.: B60R 22/12

(54) **SEATBELT WITH UNOBTRUSIVE HAPTIC ACTUATORS**
SICHERHEITSGURT MIT UNAUFFÄLLIGEN HAPTISCHEN AKTUATOREN
CEINTURE DE SÉCURITÉ AVEC ACTIONNEURS HAPTIQUES DISCRETS

(30) Priority: 02.02.2018 IN 201841004099
(43) Date of publication of application: 09.12.2020
(73) Proprietor: Autoliv Development AB, 447 83 Vårgårda (SE)
(72) Inventor: ATWADKAR, Abhijeet, Bangalore Karnataka 562 114 (IN); ANANTHAN, Suba, Bangalore Karnataka 562114 (IN); RAJ, Atheet, Bangalore Karantaka 562114 (IN); BALARAM, Ashwin, Bangalore Karnataka 562114 (IN)
(74) Representative: Müller Verweyen
(86) International application number: PCT/EP2019/052216
(87) International publication number: WO 2019/149740

(56) References cited:
- DE-A1- 10 209 695
- DE-B3- 102013 001 323
- DE-B4- 10 303 227
- JP-A- 2015 200 036
- US-A1- 2013 334 802
- US-A1- 2015 265 200

## Description

### Technical Field

This invention relates to a seat belt for an occupant of an automotive vehicle, particularly a seat belt with a haptic webbing that employs unobtrusive and wear-resistant haptic actuators. The present invention also relates to a system and method for providing haptic alerts to an occupant of a motor vehicle, through the seat belt webbing of seat belt with unobtrusive and wear-resistant haptic actuators, where the haptic alerts are rendered based on haptic sequences that are generated based on corresponding event alerts.

### Background of the invention

It is known that drowsiness of a driver of a vehicle or any other lack of attention during the driving of the vehicle, is one of the major causes of accidents, particularly when driving at high speeds on highways.

A seat belt, which is one of the primary restraint systems, is used to protect vehicle occupants of a motor vehicle, in case of a collision of the vehicle. The seat belt includes a webbing having lap and shoulder portions that are secured across the pelvis and rib cage of the vehicle occupant, to restrain the occupant during the operation of crash forces. However, these restraint actions are normally triggered subsequent to the occurring collision events.

However, a challenge that remains is to communicate, instantly, an imminent accident situation, to a driver of a vehicle. Some of the known technical solutions include triggering of audible and visual signals to alert the driver.

In such situations, in order to get the attention of a driver, the available time window is only few milliseconds. Accordingly, haptic arrangements, which generate haptic sensations to the vehicle driver, are employed, in addition to audible or visual signals, to alert the driver or a vehicle occupant. Some of the known haptic arrangements include, vibrating steering wheel, driver's seat and seat belts, by energising the desired actuators.

Presently, seatbelts provide haptic warning either by means of a motorized retractor or by a vibrating unit that is arranged inside the buckle of seat belt. These arrangements transfer the vibration from the source (retractor or buckle of seat belt) to the shoulder or lap portions of the seat belt webbing.

CN106364450 discloses a seat belt with a webbing with a number of the vibration motors and body sense controller that is mounted at the position of the anchor plate. The motor driving units of the body sense controller is connected with the control parts of the vibration motors through wire harnesses, to provide mobile data communication and interaction with the vehicle occupant, to enhance comfort level of the occupant, for wearing the seat belt. Further, since the haptic elements are placed on the outer periphery of the webbing of a seat belt, the haptic elements may undergo wear and tear or damage due to regular usage. For Instance, a physical damage due to contact with the other sharp surfaces of a seat belt systems or things during the wearing and removal of seat belts, damage due to environmental degradation.

DE 10 2013 001323 discloses a seat belt for an occupant of a vehicle, comprising a seat belt webbing with first and second surfaces disposed to be in physical contact with the occupant of the vehicle, a vibration-enhancing device disposed in between the first and second top surfaces and plurality of haptic actuators with haptic drivers connected to power and communication lines.

Current seat belt devices, which provide haptic feedback, normally include a motor that is attached to a spooling element to deliver haptic vibrations to the occupant by pulling or restraining the seat belt webbing. The vibrations are generated, by rotating the spooling element in clockwise and counter clockwise direction repetitively. Since, such devices are driven by motors and gear mechanisms, they are bulky and consume more power.

The current seat belt devices do provide haptic alerts but are limited by minimum patterns of vibratory feedback to an occupant and also limited by the non-availability of haptic alerts that can be triggered in a unique sequence.

### Objects of the present invention

An object of the present invention is to provide a seat belt for an occupant of an automotive vehicle, with a seat belt webbing that employs a plurality of unobtrusive and wear-resistant haptic actuators that are in haptic communication with the occupant.

Another object of the present invention is to provide a seat belt for an occupant of an automotive vehicle with a seat belt webbing, where the unobtrusive and wear-resistant haptic actuators are arranged inside a vibration-enhancing haptic channel of the seat belt webbing.

Still another object of the present invention is to provide a seat belt for an occupant of an automotive vehicle with a seat belt webbing, where the unobtrusive and wear-resistant haptic actuators are non-motor driven.

It is also an object of the present invention to provide a seat belt system for an automotive vehicle, to provide unique haptic alerts to an occupant wearing the seat belt, which are triggered by events that can lead to potential safety concerns or hazardous operational conditions, where the haptic alerts that are based on unique haptic sequences are rendered through the unobtrusive and wear-resistant haptic actuators of the seat belt webbing.

Yet another object of the present invention is to provide a method for providing unique haptic alerts to an occupant of a vehicle wearing the seat belt of the present invention, where the haptic alerts are based on unique haptic sequences and are rendered through a plurality of unobtrusive and wear-resistant haptic actuators of the seat belt webbing.

The above objects are achieved with the features of the apparatus claim 1 and the method claim 14.

### Brief description of the drawings

**FIG.1** is a schematic view of an automotive vehicle that pictorially illustrates on-board event capturing members.
**FIG.2** is another schematic view of an automotive vehicle that pictorially illustrates on-board event capturing members.
**FIG.3** is a schematic front view, illustrating an occupant restrained by a seat belt of the present invention, with unobtrusive and wear-resistant haptic actuators, where the seat belt is connected to a retractor mounted on seat body and an anchor plate connected to a body of a vehicle.
**FIG.4** is a schematic front view, illustrating an occupant restrained by a seat belt of the present invention, with unobtrusive and wear-resistant haptic actuators, where the retractor is connected to the seat and anchor plate to the vehicle.
**FIG.5** is a schematic partial sectional view of the arrangement of unobtrusive and wear-resistant haptic actuators, in the seat belt webbing, where an electrically insulated substrate with unobtrusive and wear-resistant haptic actuators, is shown in a drawn out position from a vibration-enhancing haptic channel of the seat belt webbing.
**FIG.6** is a schematic partial longitudinal sectional view of the arrangement of the unobtrusive and wear-resistant haptic actuators in the seat belt webbing, where the electrically insulated substrate with unobtrusive and wear-resistant haptic actuators, is shown in a drawn out position from the vibration-enhancing haptic channel of the seat belt.
**FIG.7** is a schematic sectional side view of the arrangement of the unobtrusive and wear-resistant haptic actuators on either side of the electrically insulated substrate is shown in a drawn out position from the vibration enhancing haptic channel of the seat belt.
**FIG.8** is a schematic partial sectional view of the arrangement of combination of individual and an array of unobtrusive and wear-resistant haptic actuators in the webbing of the seat belt, where the electrically insulated substrate with unobtrusive and wear-resistant haptic actuators is shown in a drawn out position from the vibration-enhancing haptic channel of the seat belt.
**FIG.9** is a schematic partial longitudinal sectional view of the arrangement of combination of individual and an array of unobtrusive and wear-resistant haptic actuators in the webbing of the seat belt, where the electrically insulated substrate with unobtrusive and wear-resistant haptic actuators is shown in a drawn out position from the vibration-enhancing haptic channel of the seat belt.
**FIG.10** is a schematic partial sectional view of the arrangement of unobtrusive and wear-resistant haptic actuators in independent vibration-enhancing haptic channels of the seat belt webbing, where the electrically insulated substrates with unobtrusive and wear-resistant haptic actuators is shown in a drawn out position from the independent vibration-enhancing haptic channels of the seat belt webbing.
**FIG.11** is a block drawing indicating the schematic arrangement of devices of the seat belt system of the present invention.
**FIG.12** is an internal schematic drawing of the haptic controller.
**FIGS.13(a)****-(f)** is a high level flow drawing exemplifying a method for providing unique haptic alerts to an occupant of a vehicle wearing the seat belt of the present invention.

### Summary of the present invention

The present invention provides a seat belt for an occupant of a vehicle, with a seat belt webbing having at least a vibration-enhancing haptic channel that is disposed in between the first and second top surfaces. At least an electrically insulated substrate, which is defined by power lines and communication lines, is disposed inside at least the vibration-enhancing haptic channel. Unobtrusive and wear-resistant haptic actuators are connected to at least the electrically insulated substrate and disposed to be in haptic communication with inner portions of the first or second top surface of the seat belt webbing, through at least the vibration-enhancing haptic channel. The present invention also provides a seat belt system and a method for rendering unique haptic alerts to an occupant of a vehicle, based on corresponding events that can lead to potential safety concerns or hazardous operational conditions.

### Detailed description of the invention

The present invention provides seat belt with a haptic webbing that is constituted by a plurality of unobtrusive and wear-resistant haptic actuators, to provide haptic unique alerts or signals to an occupant of an automotive vehicle, wearing the seat belt. The present invention also provides a seat belt system with the haptic webbing with unobtrusive haptic actuators that are actuated by corresponding unique haptic sequences, to provide haptic alerts of variable intensity and pattern to an occupant of an automotive vehicle wearing the seat belt. The present invention further provides a method where unique haptic alerts are rendered to an occupant of a vehicle wearing the seat belt, through a plurality of unobtrusive and wear-resistant haptic actuators of the seat belt webbing that are actuated by haptic sequences.

The subject matter of the present invention is applicable to seat belt systems of various constructions, such as a haptic webbing arrangement for a seat belt with pillar mounted retractor, an anchor plate arranged on the body of an automotive vehicle, a retractor and an anchor plate are arranged on the body of a vehicle, a retractor that is arranged on a seat and an anchor plate on the body of an automotive vehicle and a dual retractor for the seat belt that is arranged on a seat or on the body of an automotive vehicle.

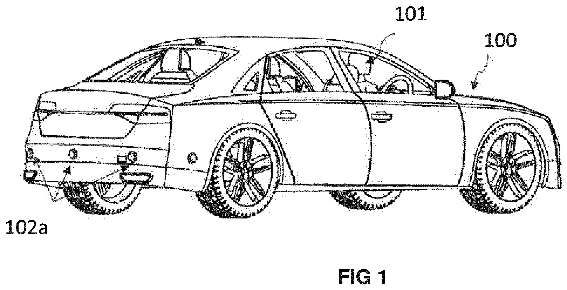

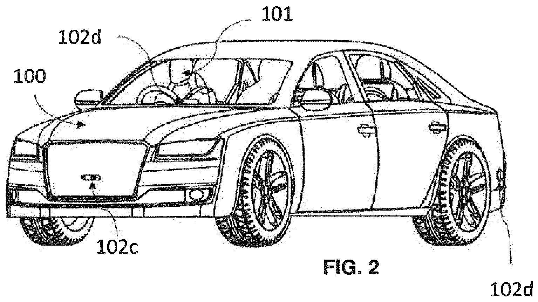

As illustrative representations of the present invention, **FIG.1** and **FIG.2****,** depict an automotive vehicle **100** with an occupant **101** along with an arrangement of set of on-board event capturing members. The exemplary on-board event capturing members include, rear parking and distance monitoring device **102a,** side obstacle and distance monitoring device **102b,** front lane departure monitoring device **102c** and occupant monitoring device **102d.** The on-board event capturing members are selected to perform functions governing sensing and capturing of events pertaining to automobile safety and security and are selected from devices/sensors, such as charge-coupled devices (CCDs), Radar, Lidar, infrared sensors, image capturing and processing devices, wheel speed sensor, charge-coupled devices (CCDs), where the selected devices are driven and controlled by suitable electrical and electronic components and circuits, such as micro controllers and microprocessors. In this embodiment, only a few on-board event capturing members are describe, corresponding to their respective functionalities. It is however, understood here that the total number of these on-board event capturing members can be varied and are scalable, considering the incorporation of various other automobile event scenarios, depending on the requirement of the vehicle manufacturers. It is to be understood here that the number, type and position of these on-board event capturing members are event-specific and related to events that can lead to potential safety concerns or hazardous operational conditions. Suitable adaptations of these on-board event capturing members are envisaged here and are to be incorporated by the vehicle manufacturers and automobile safety system providers.

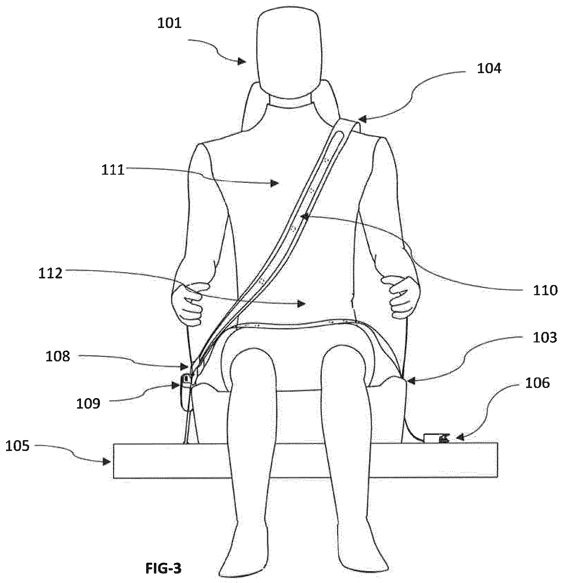

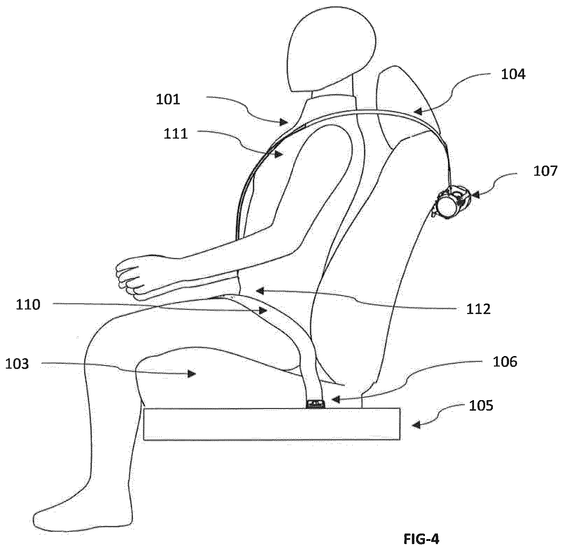

A seat belt webbing **110** for the occupant **101** in accordance with one of the preferred embodiments of the present invention, is shown in **FIG.3** and **FIG.4****,** where the seat belt arrangement illustrates a three-point continuous loop seat belt system for use in restraining the occupant **101** of the vehicle **100** to a vehicle seat **103.**

During the operation of the vehicle **100,** the occupant **101** sits on a vehicle seat **103** and wears the seat belt **104,** which in **FIG.3** and **FIG.4****,** is illustrated as a front driver's seat or a passenger's seat of the vehicle **100.** The seat belt webbing **110,** when worn by the occupant **101,** is arranged to extend about the occupant **101,** as shown in **FIG.3****.** One end of the seat belt webbing **110** is anchored to the vehicle body **105,** at an anchor plate **106** located on one side of the vehicle seat **103.** The other end of the seat belt webbing **110** is connected to a retractor **107,** which is illustratively shown as fixed to the seat body **103** on the same side of the vehicle seat **103.** The seat belt webbing **110** is also permitted to pass through a tongue assembly **108.** To engage the seat belt webbing **110,** the tongue assembly **108** is held and pulled across the lap and torso of the occupant **101** sitting on the vehicle seat **103.** As the tongue assembly **108** is pulled across the lap and torso of the occupant **101,** the tongue assembly **108** moves along the seat belt webbing **110** and the belt webbing **110** is unwound from the retractor **107,** when the seatbelt webbing **110** is pulled across the torso **111** and lap **112** and of the occupant **101.** The tongue assembly **108** is connected with a buckle **109,** as shown in **FIG.3****.** The buckle **109** is connected to the body **105** and is arranged on the side of the vehicle seat **103** opposite to the anchor plate **106.** When the seat belt webbing **110** is thus in buckled position, the length of seat belt webbing **110** extends over a torso portion **111** of the vehicle occupant **101** and a lap portion **112** extends across the lap of the vehicle occupant **101.** When the seatbelt **104** is not in use, the seat belt webbing **110** is wound on the retractor **107.**

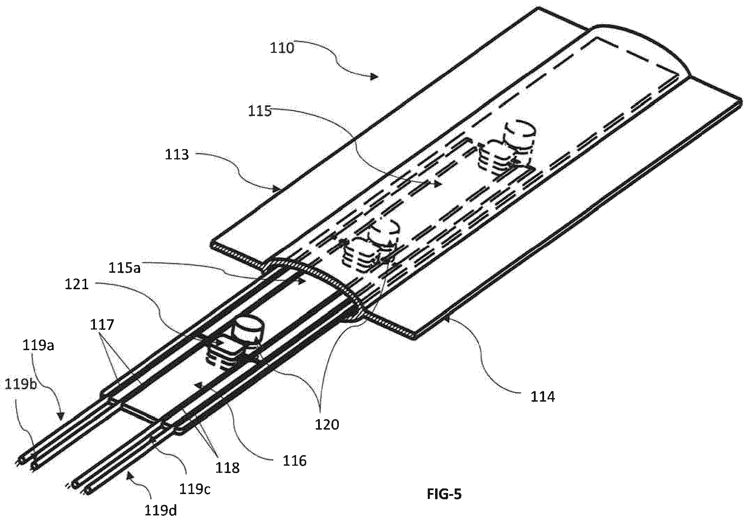

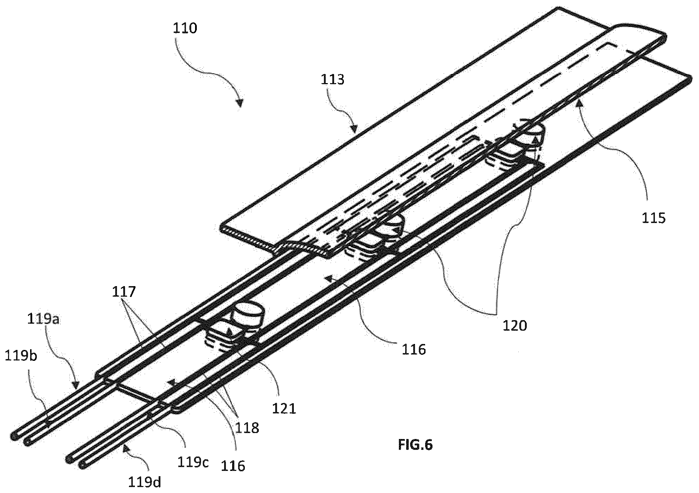

Now, referring to **FIG.5** and **FIG.6****,** the preferred embodiments of the arrangement of unobtrusive and wear-resistant haptic actuators inside the seat belt webbing **110** along with haptic driver **121** are now described. **FIG.5** is a partial cut view of the seat belt webbing **110,** where the arrangement of the unobtrusive and wear-resistant haptic actuators **120** and haptic driver **121** is shown as drawn out from the seat belt webbing **110.** Whereas, **FIG.6** is a partial longitudinal cut view of the seat belt webbing **110,** depicting the arrangement of the unobtrusive and wear-resistant haptic actuators **120,** as drawn out from inside the seat belt webbing **110.**

The seat belt webbing **110,** of the seat belt **104,** is made from a tensile and a high tenacity material. The preferable material includes polyester, polypropylene, nylon, fabric or a combination of these materials, having a desirable wear resistance and elasticity. In a preferred embodiment of the present invention, the seat belt webbing **110** is formed with a first surface **113** and a second surface **114** and these two **113** and **114** are joined together peripherally or on the edges, to form a unitary seat belt webbing **110,** as shown in **FIG.5****.** The surfaces **113** and **114** can be joined together either by stitching, weaving, moulding or by any other suitable means, which can provide a strong bonding of the surfaces **113** and **114.**

A vibration-enhancing haptic channel **115** is formed preferably, along the midline and along the axial length of the seat belt webbing **110,** as illustrated in **FIG.5****.** The vibration-enhancing haptic channel **115** separates the first surface **113** from the second surface **114.** In other words, the vibration-enhancing haptic channel **115** is in the form of a conduit or a pocket that extends along the axial length of the seat belt webbing **110,** between the first surface **113** and the second surface **114.** In other words, vibration-enhancing haptic channel **115** is physically connected to the first surface **113** and the second surface **114.**

The inner surface **115a** of the vibration-enhancing haptic channel **115** can be advantageously coated with a suitable piezoelectric or piezo ceramic material, to enhance the mechanical resonance properties of the vibration-enhancing haptic channel **115,** and in turn the vibrations through the first and second surfaces **113** and **114.** The coated vibration-enhancing haptic channel **115** can be connected to power lines **117,** to apply charge to the vibration-enhancing haptic channel **115** to obtain a mechanical response to the electrical simulation based on converse piezoelectric effect. The vibration-enhancing haptic channel **115** is preferably coated with a piezo electric material or piezoceramic materials, preferably perovskites. These materials facilitate enhancement of vibration of the material on the application of electrical charge. In other words, these materials exhibit the reverse piezoelectric effect, i.e., the internal generation of a mechanical strain resulting from an applied electrical field. Advantageously, nanoparticles of these materials are used to provide the coating of inner surface **115a** of the vibration-enhancing haptic channel **115.** Therefore, the vibration-enhancing haptic channel **115** coated with piezoelectric or piezoceramic material, facilitates a controlled amplification of physical displacement (stroke) when the required electric potential is applied. In the instant exemplary vibration-enhancing haptic channel **115,** where the inner surface **115a** is coated preferably with a piezo electric or piezo ceramic material, suitable haptic drivers are adapted for use to render haptic feedback.

The inner surface **115a** of the haptic channel **115** can also be advantageously coated with a suitable hydrophobic material.

It is however understood here that the vibration-enhancing haptic channel **115** can also used as such without any piezo electric or ceramic coating for enhancing the vibration of first and second surfaces **113** and **114.**

The vibration-enhancing haptic channel **115** in the exemplary construction as shown in **FIG.5** and **FIG.6** is with a substantially elliptical cross section. However, other cross sections such as circular, semi-circular or non-circular cross sections can be suitably adapted for use.

An electrically insulated substrate **116** is arranged in the vibration-enhancing haptic channel **115.** The electrically insulated substrate **116** can advantageously be made of any suitable flexible material, such as such as polyimide, polyether ether ketone (PEEK) or a transparent conductive polyester. Power lines **117** are formed on the substrate **116** and terminal leads **119a, 119b, 119c, 119d** are connected to the power lines **117** as shown in **FIG.5** and **FIG.6****.** In addition, digital communication lines **118** are also provided on the electrically insulated substrate **116** for the transmission of digital signals from interconnected electronic devices such as processors, controllers, sensors etc., along with the terminal leads **119a, 119b, 119c, 119d.**

Unobtrusive and wear-resistant haptic actuators **120** and haptic driver **121** are mounted on the electrically insulated substrate **116** and connected to the power lines **117** and digital communication lines **118** as shown in **FIG.5** and **FIG.6****,** to receive electrical energy through the power lines **117** along with digital communication signals through communication lines **118** and convert the electrical energy into corresponding physical displacement or mechanical vibrations. The preferred unobtrusive and wear-resistant haptic actuators **120** of the present invention are with no moving parts like gears, bearings. The exemplary unobtrusive and wear- resistant haptic actuators **120** include piezo electric actuators, linear resonant actuators, advanced tactile array cueing actuators (ATACA), electro active actuators made with ionic polymer-metal composites having a thin ionomeric membrane and noble metal electrodes, ultra-sonic force field tactile actuators and nanites. A combination of these unobtrusive and wear resistant haptic actuators can also be suitably adapted for use. For instance, the linear resonant actuators (LRAs), piezo electric actuators, advanced tactile array cueing actuators (ATACA) are electromechanical devices that vibrate to provide a tactile feedback, whereas ultra-sonic force field tactile actuators and nanites displace to provide haptic feedback. In contrast to a DC motor, the LRAs require an alternating driving signal that can move an actuator in upward and downward directions.

The unobtrusive and wear-resistant haptic actuators **120** are mounted on the electrically insulated substrate **116** and are preferably separated with intervening spaces, as particularly shown in **FIG.5****.** The intervening spaces between the unobtrusive and wear-resistant haptic actuators **120,** determine the required density of the unobtrusive and wear-resistant haptic actuators **120** for a given area of the seat belt webbing **110.** Since, the unobtrusive and wear-resistant haptic actuators **120** are arranged inside the seat belt webbing **110,** these actuators are shielded from malfunctioning resulting from wear and tear and exposure to environmental or operational causes. Above all, the unobtrusive nature of these actuators help in a hinder-free flow of the seat belt **103** through the pillar loop and the seat belt buckle **109,** during the course of wearing and removal of the seat belt **104,** where the seat belt webbing **110** is retracted into and released from the retractor **107.**

The unobtrusive and wear-resistant haptic actuators **120** are provided with haptic drivers **121** to render a resonance tracking to detect the resonant frequency of the unobtrusive and wear-resistant haptic actuators **120** in real time and to deliver an optimum haptic feedback for a given haptic alert sequence. In addition, haptic drivers **121** facilitate an automatic breaking of haptic sequence to prevent undesired extension of the haptic alert sequence of the unobtrusive and wear-resistant haptic actuators **120.**

Auto-resonance tracking by the haptic drivers **121** take advantage of the back-EMF that is generated by the unobtrusive and wear-resistant haptic actuators **120,** to determine the resonant frequency. With this,the haptic drivers **121** can determine how to control the frequency, vibration strength, and start and stop time of the unobtrusive and wear-resistant haptic actuators **120,** in an effective manner.

Auto-resonance tracking makes use of the electromechanical properties of unobtrusive and wear-resistant haptic actuators **120.** Inside the unobtrusive and wear-resistant haptic actuators **120,** the back-EMF changes as the magnet moves closer or further away from the drive electrodes. This back-EMF signal is sensed by the haptic drivers **121,** every cycle and sent to the auto-resonance engine present inside the haptic drivers **121.** The auto-resonance engine then determines the frequency.

If the frequency thus determined is too high, the haptic driver **121** will reduce the output frequency, and if the frequency is too low, the haptic driver **121** will accordingly increase the output frequency. This dynamic tracking ensures a more consistent vibration of the unobtrusive and wear-resistant haptic actuators **120.** Consistent vibration is much harder to achieve with a non-auto-resonance drivers, because the unobtrusive and wear-resistant haptic actuators **120** resonant frequency can constantly vary as a result of the manufacturing tolerances and environmental factors. Further, a real-time tracking of the resonant frequency is advantageous to achieve vibrations that are stronger and consistent.

The unobtrusive and wear-resistant haptic actuators **120** are advantageously drive at the resonant frequency, to obtain optimal vibrations and start up performance. Likewise, in order to stop the actuation of the unobtrusive and wear-resistant haptic actuators **120,** they are to be driven at their resonant frequency at 180° out-of-phase.

As shown in **FIGs.5** and **6** the electrically insulated substrate **116** with unobtrusive and wear-resistant haptic actuators **120,** is inserted into the vibration-enhancing haptic channel **115,** so that the unobtrusive and wear-resistant haptic actuators **120** are physically connected to the inner portion of the vibration-enhancing haptic channel **115** and with the inner portion of the first surface **113.**

On actuation, the unobtrusive and wear-resistant haptic actuators **120,** respond by undergoing displacement (preferably in the linear direction) or vibrations with desired amplitude, depending on the adoption of particular type of actuators and these displacements or vibrations are transmitted to the occupant **101** wearing the seat belt **104,** in the form of unique haptic alerts, preferably through the first surface **113** of the seat belt webbing **110,** based on a triggering event, which is sensed by the vehicle-onboard event capturing members **102a, 102b, 102c, 102d** and communicated to a haptic controller (not shown in this drawing). The haptic controller then processes and generates a corresponding unique haptic sequence in the form of haptic alerts and the same is communicated to the haptic drivers **121,** which in turn delivers the haptic alert to the unobtrusive and wear-resistant haptic actuators **120.**

In this exemplary embodiment, the unobtrusive and wear-resistant haptic actuators **120** are mounted or arranged on one side of the insulating substrate **116,** as shown in **FIG.5** and **FIG.6****,** where the unobtrusive and wear-resistant haptic actuators **120** are in functional haptic connectivity with the inner surface of the first surface **113** of the seat belt webbing **110.**

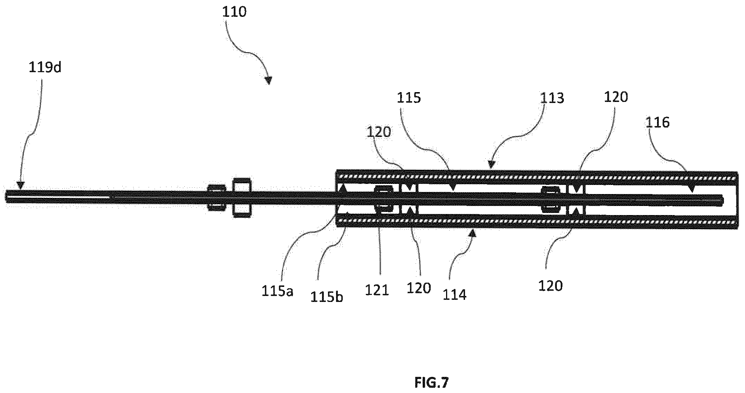

In another aspect of the present invention, as illustrated in **FIG.7****,** the unobtrusive and wear-resistant haptic actuators **120** are arranged on both sides of the insulating substrate **116,** where the unobtrusive and wear-resistant haptic actuators **120** are in functional haptic connectivity with the inner portions **115a** and **115b** of the first and second surfaces **113, 114** of the seat belt webbing **110.** Through this arrangement, the haptic functionality is imparted through both sides of the seat belt webbing **110.** The arrangement of the unobtrusive and wear-resistant haptic actuators **120** on both sides of the insulating substrate **116** is preferably implemented to address the issue redundancy of any unobtrusive and wear-resistant haptic actuators **120,** thereby rendering a fail-safe contraption with an increased reliability.

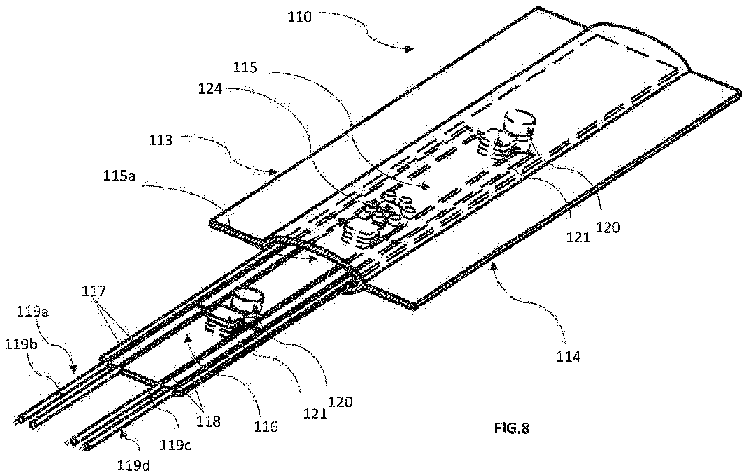

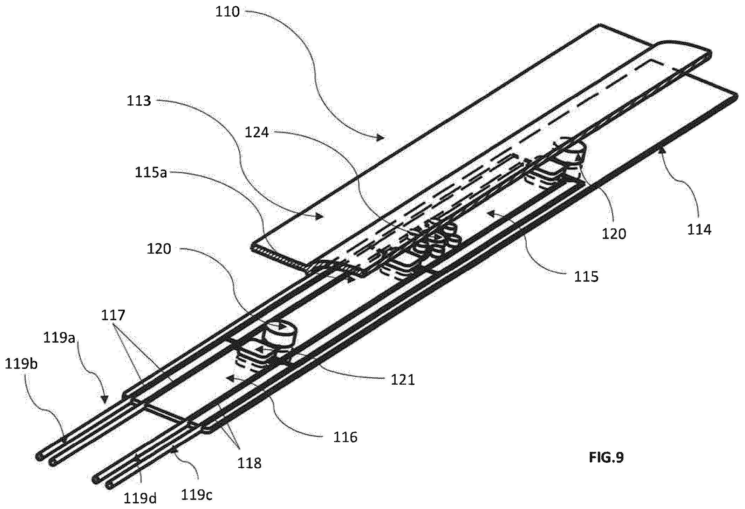

**FIG.8** and **FIG.9** show another preferred embodiment of arrangement of unobtrusive and wear-resistant haptic actuators **120,** where the unobtrusive and wear-resistant haptic arrangement is in form of combination of individual unobtrusive and wear-resistant haptic actuators **120** and an array unobtrusive and wear-resistant haptic actuators **124,** which are mounted on the electrically insulated substrate **116.** In this preferred embodiment, a pattern is thus formed by a group of unobtrusive and wear-resistant haptic actuators **120** and **124.** This arrangement of the array of unobtrusive and wear-resistant haptic actuators **120,** facilitate rendering of haptic alerts with a unique alerts, based on the haptic sequences corresponding to a particular triggering event. One of the advantageous attributes of the aforementioned array arrangement is seen when the array of haptic actuators **120** and **124** are concentrated in some pre-designated locations of the seat belt webbing **110,** where the designated locations connect with the left and right lap portions of the occupant **101,** whenever the seat belt **104** is used by the occupant **101.** It is understood here that the formation of array of unobtrusive and wear-resistant haptic actuators **124** can be formed inside the seat belt webbing **110** at any location. This arrangement of the array of unobtrusive and wear-resistant haptic actuators **124** can also be arranged on the both sides of the electrically insulated substrate **116.** Such an arrangement of the array of unobtrusive and wear-resistant haptic actuators **124** along with the unobtrusive and wear-resistant haptic actuators **120** assist in providing haptic alerts of high intensity, at the pre-determined location of the seat belt **104** in response to certain pre-determined critical events, as designated by an end user or the manufacturer.

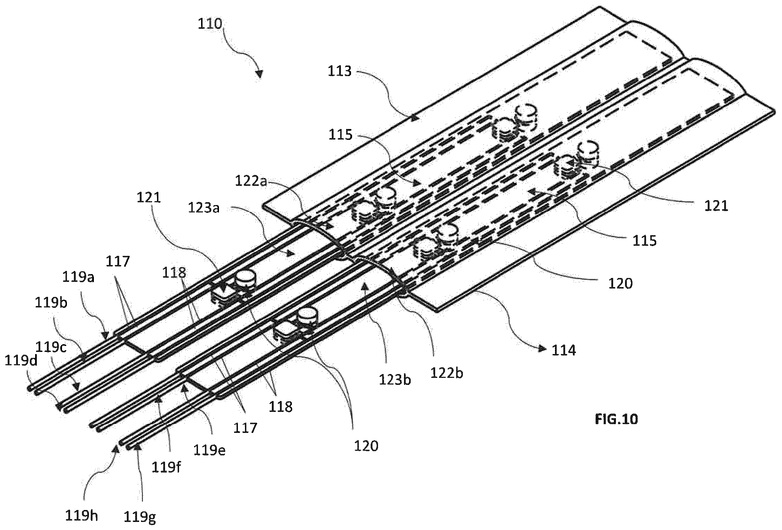

In further aspect of the present invention, as illustrated in **FIG.10****,** a pair of independent vibration-enhancing haptic channels **122a** and **122b** are formed in between the first and second surfaces **113, 114** of the seat belt webbing **110.** These independent channels **122a** and **122b** are preferably arranged in parallel to each other, with intervening distances between the pair of independent vibration enhancing haptic channels **122a** and **122b.** Electrically insulated substrates **123a** and **123b** with unobtrusive and wear-resistant haptic actuators **120,** are inserted into the independent vibration enhancing haptic channels **122a** and **122b,** so that the unobtrusive and wear-resistant haptic actuators **120** are in functional connectivity with the inner portions of the first surface **113.** The unobtrusive and wear-resistant haptic actuators **120** are also connected to the power lines **117,** data communication channels **118** and terminal leads **119a, 119b, 119c, 119d, 119e, 119f, 119g, 119h,** as described above. This desired functional connectivity relates to receiving of the vibration alerts from the unobtrusive and wear-resistant haptic actuators **120,** when the unobtrusive and wear-resistant haptic actuators **120,** present in the independent vibration enhancing haptic channels **122a** and **122b** are actuated the unobtrusive and wear-resistant haptic actuators **120** transmit the corresponding displacement or vibration signals, with desired amplitude, to the occupant **101** wearing the seat belt **104** preferably through the first surface **113** of the seat belt webbing **110,** based on a triggering event, that is sensed by the vehicle-onboard event capturing members **102** and received by the unobtrusive and wear-resistant haptic actuators **120.** The arrangement of independent vibration-enhancing haptic channels **122a** and **122b** can also be implemented on the both sides of the electrically insulated substrates **123a** and **123b.** If preferred so, a combination of arrays of unobtrusive haptic actuators **124** can also be implemented along with this embodiment of having independent vibration enhancing haptic channels (not shown in this figure). The independent vibration-enhancing haptic channels **122a** and **122b** are preferably coated with a piezo electric or piezo ceramic material, preferably perovskites. Advantageously, nanoparticles of these materials are used to provide the coating of inner surfaces of the independent vibration-enhancing haptic channel **122a** and **122b.** It is also understood here that the independent vibration-enhancing haptic channel **122a** and **122b** can also used as such without any coating for enhancing vibration of first and second surfaces **113** and **114.** The inner surfaces of the independent vibration-enhancing haptic channel **122a** and **122b** can also be advantageously coated with a suitable hydrophobic material.

One of the advantages of the incorporation above-mentioned embodiment is not only to expand and concentrate tactile haptic alert areas of the seat belt webbing **110** but also to address the issue of redundancy of any unobtrusive and wear-resistant haptic actuators **120** or the array of unobtrusive and wear-resistant haptic actuators **124,** thereby rendering a fail-safe contraption with an increased reliability.

Therefore, the seat belt **104** is provided with the seat belt webbing **110** having first and second surfaces **113, 114** and disposed to be in physical contact with the occupant **101** of the vehicle **100.** The vibration-enhancing haptic channel **115** is disposed in between the first and second top surfaces **113, 114.** The electrically insulated substrate **116** is configured with power and communication **117, 118,** and arranged inside the vibration-enhancing haptic channel **115.** The unobtrusive and wear-resistant haptic actuators **120** with haptic drivers **121** are connected to the power and communication lines **117, 118** of the electrically insulated substrate **116** and disposed to be in haptic communication with inner portions of the first or second top surface **113, 114** of the seat belt webbing **110,** through the vibration-enhancing haptic channel **115.**

Now, the preferred embodiments of the seat belt system **226** employing the haptic seat belt **110** of the present invention to provide tactile and unique haptic alerts to the occupant **101** are described.

Accordingly, there is provided a seat belt system **226,** where the aforedescribed seat belt webbing **110** of the present invention, is incorporated in conjunction with other suitable electronic/electrical interfaces, vehicle subsystems or automobile hardware. Since, the seatbelt system is controlled by a computer/processor/controller, there exists an opportunity to embed additional intelligence into the operation of system.

Prior to discussing the details of various aspects of the present invention, it should be understood that the following description is presented largely in terms of logic and operations that may be performed by conventional electronic/electrical components. These components, which may be grouped in a single location or distributed over a wide area, generally include processors, memory, storage devices, display devices, input devices (e.g., sensors), etc. It will be appreciated by one skilled in the art that the logic described herein may be implemented in a variety of configurations, including software, hardware, or combinations thereof. The hardware may include but is not limited to, analog circuitry, digital circuitry, processing units, application specific integrated circuits (ASICs), and the like. It is also understood here that the preferred components can also be used in a distributed environment where the components are accessible to each other through communication links, including remote communication links.

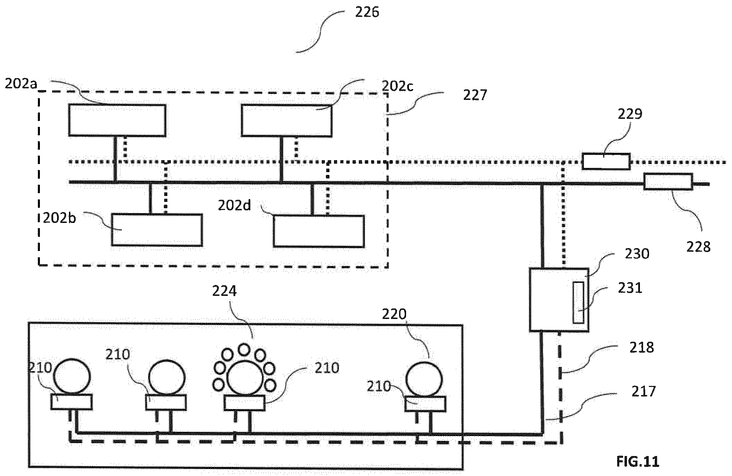

**FIG.11** is an overall schematic view of the seat belt system **226** according to the invention that is used in conjunction with the seat belt **104** of the present invention. The seat belt system **226** comprises an event capturing module **227,** having exemplary on-board event capturing members, such as, rear parking and distance monitoring device **202a,** side obstacle and distance monitoring device **202b,** front lane departure monitoring device **202c** and occupant monitoring device **202d,** which are powered by an electrical power source **228** of the vehicle **100.**

The power source **228,** which is a general power source provided in automotive vehicle **100** is connected to the seat belt system **226,** through power lines **217,** for energising the various components of the seat belt system **226.**

The haptic controller **230,** is in communication with the on-board event capturing members **202a, 202b, 202c, 202d** with help of Controller Area Network Bus **229** (CAN Bus). The signals from the event capturing members **202a, 202b, 202c, 202d** are subjected to digital processing steps such as signal conditioning, error correction etc., before the processed signals are communicated to the CAN Bus **229.** The CAN Bus **229** is arranged to receive the signals/communications from the designated on-board event capturing members **202a, 202b, 202c, 202d.** In automobiles, the interlinking of and communication among the electronic devices and systems are managed by a CAN protocol. The devices and systems share their information with the CAN Bus along with their IDs and also these systems monitors all the messages in the CAN Bus for relevant information. Communication protocols such as Ethernet, Flux-ray etc., are also used in places where a higher bandwidth is required.

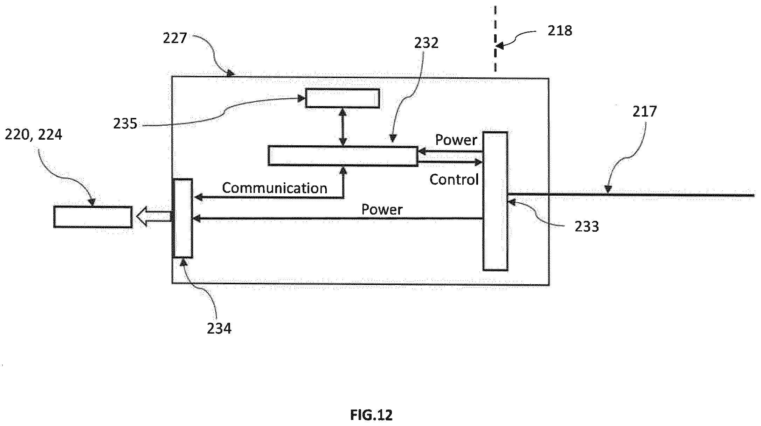

A database member **231** comprises data items as exemplarily shown in **FIG.12** and **FIG.11** such as, listing of alert events pertaining to event capturing module **226,** haptic alert sequences for the unobtrusive and wear-resistant haptic actuators **220, 224,** unique identifiers for each of haptic drivers **221** etc. The data items as shown in **FIG.12** are exemplary and non-limiting in nature. The data items can also be user-defined, depending on the manufacturer or end user requirements.

A haptic controller **230** is disposed to manage the electrical and electronic components of the system, particularly the haptic controller **230** is connected to the event capturing module **226,** the CAN Bus **229,** a database member **231** and to the haptic drivers **221** and the unobtrusive haptic actuators **220, 224** through the communication lines **218.** The haptic controller **230** can advantageously be a digital processor, a digital signal processor, an application specific integrated circuit (ASIC) or any other custom designed or off-the-shelf device, which is capable of performing the above-mentioned tasks. The haptic controller **230** includes at least a microcontroller **232** or other similar processors and digital to analog converters that are capable of interfacing with the haptic controller **230** and the unobtrusive and wear-resistant haptic actuators **220** and **224,** in real time and in a dynamic manner. The haptic controller **230** is integrally connected to the database member **231** to secure and process relevant data items such as, event alerts originating from the on-board event capturing members **202a, 202b, 202c, 202d,** haptic alert sequences for the unobtrusive and wear-resistant haptic actuators **220, 224,** unique identifiers for each of haptic drivers **221** etc., and execute a desired haptic actuation sequence, depending on the nature of alert event, by selecting an appropriate haptic actuation sequence.

The unobtrusive and wear-resistant haptic actuators **220, 224** are connected to the haptic controller **230** through the communication lines **218** with help of haptic driver **221** as shown in **Fig. 11****.**

The preferred internal schematics of the haptic controller **230** are as shown in **FIG.12****.** The haptic controller **230** includes a power management member **233,** a microcontroller **225** and an external memory **235.** The power lines **217** from the vehicle are connected to the power management member **233,** which would regulate and stabilize the Input power so that the micro controller **225** and the unobtrusive and wear-resistant haptic actuators can run without any fluctuations. The alerts from the on-board event capturing members are received through the communication line **218,** preferably from the CAN Bus **229** and is passed on to the microcontroller **225.** The micro controller **225** would then process the signal and transmit the corresponding unique haptic alert sequence, through a connector **234** to the haptic driver and in turn communicated to the unobtrusive and wear-resistant haptic actuators **220, 224** through the respective haptic drivers **221.** The connector **234** can be wire-to-board connector or a wire-to-wire connector.

Once the haptic controller **230** determines the haptic alert sequence that is required to be executed, it will turn on the power lines **217** and passes the haptic alert sequence instruction to the haptic drivers **221** through the communication lines **218.** Each of haptic drivers **221** is provided with a unique ID, which may be fixed or dynamic, which is preferably made available from the database member **231,** and the haptic controller **230** communicates with the desired haptic driver **221** through these unique IDs. The haptic drivers **221** on receipt of the communication or instruction, from the haptic controller **230,** the haptic driver **221** executes the haptic sequence through the unobtrusive and wear-resistant haptic actuators **220** and **224.** The haptic actuator(s) **220** and **224** are disposed to respond by haptic vibrations of a desired amplitude so as to vibrate with desired intensity and if preferred, with a selected pattern of vibration as incorporated in the corresponding haptic alert sequence.

The embodiments of the present invention as set forth in **FIG.11** and **FIG.12** generally illustrate and describe a plurality of controllers (or modules), or other such electrically and electronically-based components. The controllers/processors may also be combined with one another in accordance with the architecture that is adapted for use in its implementation.

In the system of the present invention, in an unlikely event of failure of execution of a set of unobtrusive haptic actuators **220, 224,** a high degree of redundancy of unobtrusive haptic actuators **220, 224** is built into the arrangement, as particularly shown in **FIGs.7** and **10****,** where the unobtrusive haptic actuators **220, 224** are incorporated on either side of the electrically insulated substrate **116** or in different vibration-enhancing haptic channels **115, 122a, 122b** to act as fail-safe option in case of failure of a set of unobtrusive haptic actuators **220, 224.**

In addition, to degree of redundancy as described above, the haptic **230** is also equipped to determine the faulty unobtrusive haptic actuators **220, 224,** by factoring total power consumption of the active unobtrusive haptic actuators **220, 224** that are installed and difference in power consumption, during the malfunctioning of any of the unobtrusive haptic actuators.

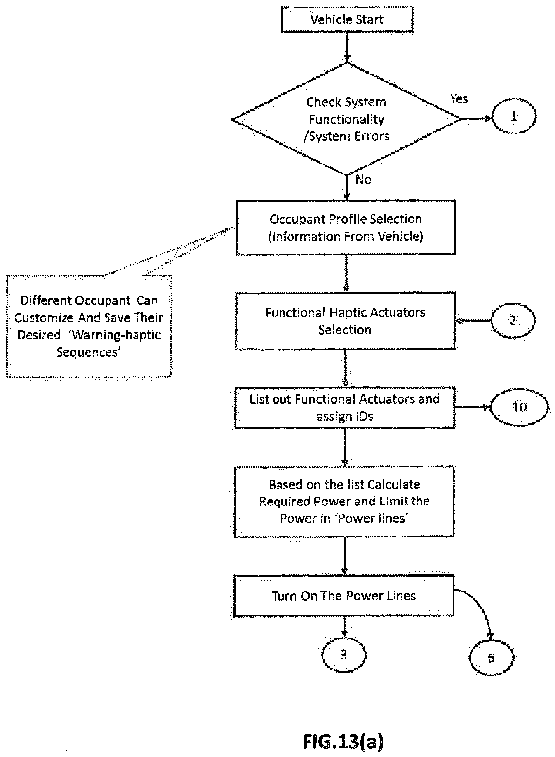

Now, functional aspects of the haptic webbing of seat belt that is equipped with a plurality of unobtrusive haptic actuators, to provide haptic alerts or signals to an occupant of a vehicle, are described by referring to **FIG.13(a)****-(f),** which is a high level flow drawing illustrating a high level functional steps of providing haptic alerts to the occupant wearing the seat belt of the present invention.

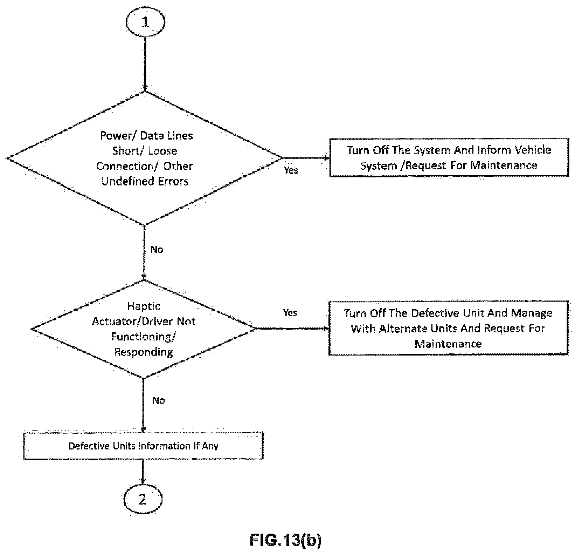

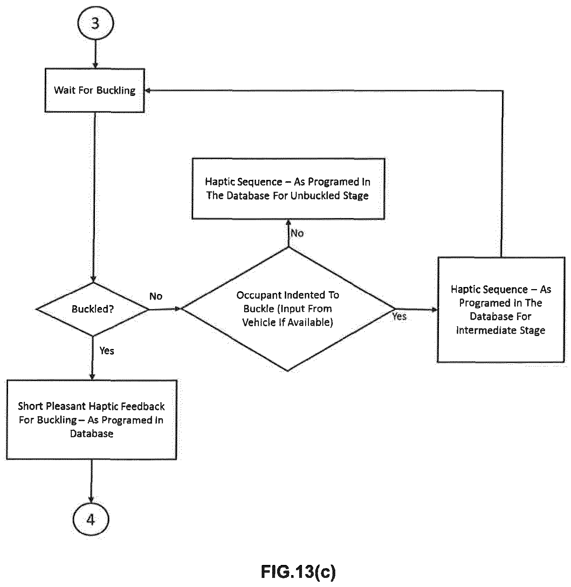

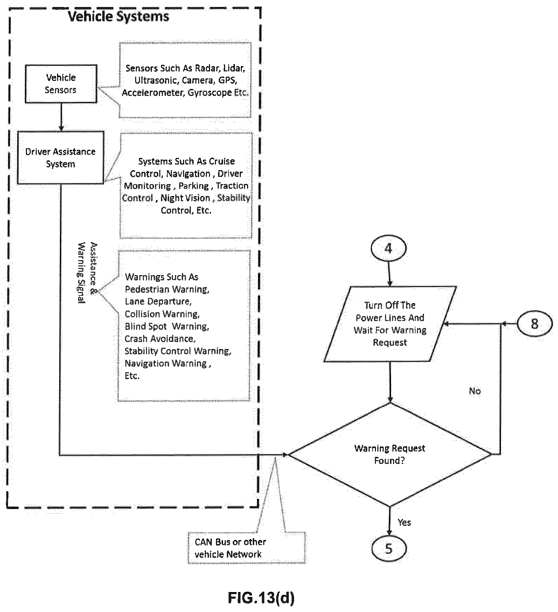

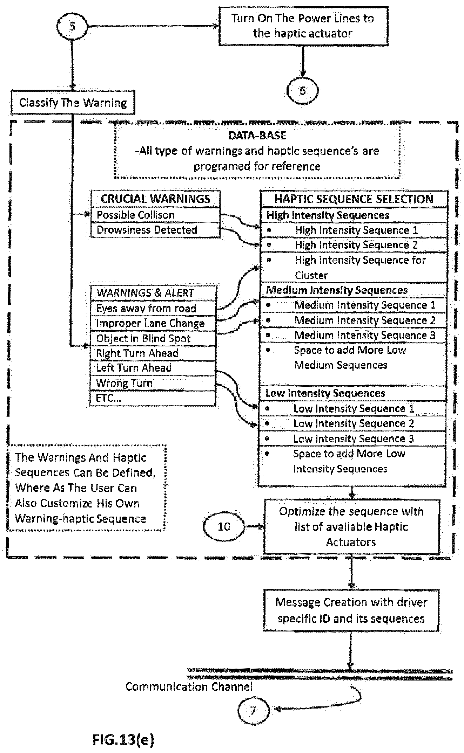

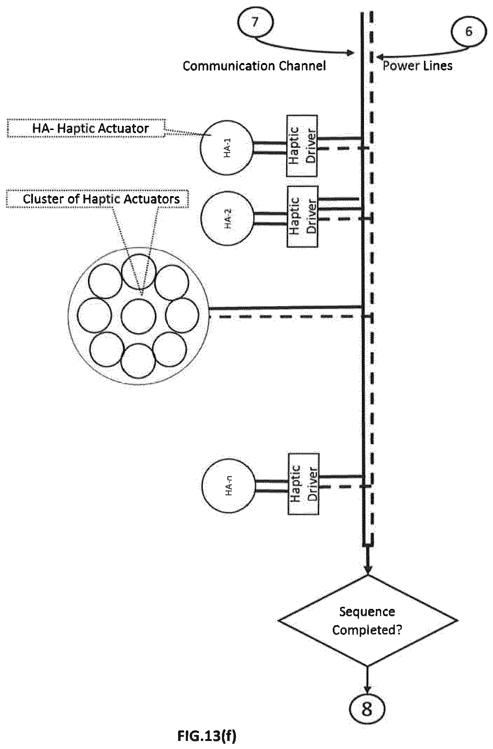

As the vehicle having the seat belt system of the present invention is turned ON(stationary or moving condition), the seat belt system is energized and executes initial diagnostic check sequences, as shown in **FIG.13****,** particularly through communication lines and the haptic controller, to check for any latent errors and to initialize the system. In this initial diagnostic process, the desired functioning of the on-board event capturing members and the unobtrusive haptic actuators are verified and should there be an malfunctioning or non-functioning of any these devices, a message (audio/video) is conveyed to the user, through the media systems as available in the automotive vehicle for necessary action.

Once, the essential devices of the system are verified, the seat belt system then checks for the proper fixation of the seat belt so as to ensure that the occupant is properly positioned on the seat and the seat belt is buckled, through the on-board event capturing member (via occupant monitoring device). In case, the occupant is seated on the seat but not buckled the seat belt properly (through an improper or lack of latching of tongue of the seat belt into buckle assembly), and the vehicle is moving, the buckle system or the on-board event capturing member sends this information to the haptic controller, which in turn picks up the desired haptic sequence from the database, pertaining to the unbuckled condition of the seat belt and triggers the desired unobtrusive haptic actuators that are placed inside the seatbelt webbing, such that the desired haptic sequence is executed by the haptic actuator(s) to alert the occupant, haptically. Once the occupant latches the tongue into the buckle assembly, the unobtrusive and wear-resistant haptic actuator delivers a short and pleasant haptic feedback to the occupant, to convey the proper positioning of the seat belt and then haptic controller turns off the power lines to the unobtrusive haptic actuators.

Following the verification of proper buckling of the seat belt, the seat belt system is now in a position to continuously monitor and sense an occurrence of a designated event, through the on-board event capturing members of the vehicle.

In the course of driving or while the vehicle is stationary, where the vehicle is occupied with at least an occupant or the driver, wearing the seat belt, preferably in a buckled condition, the vehicle-onboard event capturing members are disposed to send alert communication/signals based on the triggering events, to the haptic controller. The haptic controller receives the signal or the communication from any of the on-board event capturing members, upon the occurrence of a designated event. The haptic controller then selects from the database member, a haptic sequence that is required for the actuation of the unobtrusive haptic actuators, based on the type of the signal or communication, as received from a particular on-board event capturing member(s).

The haptic sequence of the unobtrusive haptic actuatorsis executed in numerous ways and some of preferred haptic sequences include, varying the intensities of vibration ranging from low to high of the unobtrusive haptic actuators, varying the amplitude of vibrations of the unobtrusive haptic actuators depending on the nature of the alert event, actuating the unobtrusive haptic actuators at fixed resonant frequency etc. For instance, in case, the occupant monitoring sensor senses the drowsiness of the driver, the corresponding alert is sent to the haptic controller to actuate the array of unobtrusive haptic actuators that are positioned in the seat belt webbing on either side of the occupant, with a high amplitude and intensity to alert the driver. The haptic sequence can also include a sequential actuation of the unobtrusive haptic actuators along the seat belt webbing, in a unidirectional or bidirectional manner. The haptic sequence can also based on actuating the unobtrusive haptic actuators that are located at the specific locations of the seat belt webbing (for instance, left or right side of the occupant wearing the seat belt, when there is an alert from a lane departure monitoring sensor). It is understood by a person skilled in the art that the above-mentioned haptic sequences are non-limiting in nature and can be added or changed, as per the requirements of vehicle or seat belt system manufacturers or users.

In the method of the present invention, if the haptic controller receives multiple event alerts at the same time, then the priority is accorded to the haptic sequence higher order of intensity. For example, if the haptic controller receives a 'low intensity' and 'medium intensity' event alerts at the same time, then the 'medium intensity' haptic request will take precedence. Similarly, if the haptic controller receives 'medium intensity' and 'high intensity' event alerts at the same time, the higher order haptic request, i.e., 'high intensity' takes precedence.

If the haptic controller receives multiple event alerts requests, which fall into any single category such as 'low intensity', 'medium intensity', 'high intensity'. Then, the priority among the warning events is decided based on the seniority of the event or any user-defined haptic alerts for any selected event.

Exemplary non-limiting applications of the haptic seat belt are now illustrated, using the embodiments of the invention as described above.

For instance, under normal switched-on condition of a vehicle that is provided with the seat belt system of the present invention, the occupant monitoring device (camera), continuously monitor the eye movements of an occupant (driver) of the vehicle. In the event of detection of a sleep pattern (i.e., closing of eyes for a longer time (for instance more than 2-3 seconds), by the occupant, during the course of movement of the vehicle, the monitoring device sends the event to the haptic controller, through the CAN Bus, for actuating the unobtrusive and wear-resistant haptic actuators (LRAs). Since, such an alert is a critical alert, the intensity of vibration is selected with a high-level intensity and the individual unobtrusive and wear-resistant haptic actuators along with the array of haptic actuators are actuated with high intensity, till the occupant monitoring sensor recognizes normal eye movements (wake up condition) of the occupant (driver) and the communication to that effect is sent to the haptic controller. Once the haptic sequence is communicated to the haptic driver from the haptic controller, the haptic driver will power up the haptic actuators with 3.3V and 150mA of current. Consequently, the haptic actuator vibrates at a resonant frequency of about 150Hz and the haptic alert is provided to the occupant through the seat belt webbing. This feature can also be adopted to actuate the unobtrusive and wear-resistant haptic actuators, even when the driver is distracted.

In another instance, during the course of driving of a vehicle by an occupant that is provided with the seat belt system of the present invention, in the event, the rear parking assistance device, detects an unsafe rear-end proximity of another approaching vehicle, the detected event is communicated to the haptic controller. The haptic controller then selects an appropriate unique haptic sequence for the detected event and actuates the unobtrusive and wear-resistant haptic actuators of the seat belt webbing with the required voltage, current and resonant frequency, in order to alert the occupant (driver).

In yet another instance, during the course of driving of a vehicle that is provided with the seat belt system of the present invention, If the approaching vehicle is on the left side the side obstacle and distance monitoring device senses (blind spot detection system)the event and the unobtrusive and wear-resistant haptic actuators that are arranged in the left portion of seat belt webbing is actuated based on the desired haptic sequence, to generate haptic vibration alert. If the approaching vehicle is on the right side, then the unobtrusive and wear-resistant haptic actuators mounted on the right side of the seat belt webbing is actuated with required voltage, current and resonant frequency, to generate haptic vibrations. This implementation of the system of the present invention, assists the driver in taking a timely remedial action to prevent an untoward incident of collision.

In another instance, during the course of use (parking in reverse direction) of a vehicle that is provided with the seat belt system of the present invention, the rear parking and distance monitoring device, that is located at the pre-determined location of the vehicle (where the number and location of the devices can be suitably varied and integrated) detects an obstacle within a close proximity of the vehicle or even when vehicle crosses a pre-set threshold distance from the obstacle, the device communicates this event to the haptic controller and the haptic controller then selects an appropriate haptic sequence for the detected event and haptically actuates the unobtrusive and wear-resistant haptic actuators of the seat belt webbing with required voltage, current and resonant frequency, in order to alert the occupant (driver).

In another instance, during the course of driving of a vehicle (cruising along a highway) that is provided with the seat belt system of the present invention, the front lane departure monitoring device detects any abnormal deviation or veering of the vehicle from the occupied lane, the lane departure monitoring sensor, detects such an abnormal deviation and communicates this event to the haptic controller and the haptic controller then selects an appropriate haptic sequence for the detected event and actuates the unobtrusive and wear-resistant haptic actuators of the seat belt webbing with required voltage, current and resonant frequency and also with a pattern (unidirectional, bidirectional, left or right positional actuation of the unobtrusive haptic actuators) and intensity (high), in order to alert the occupant (driver).

Therefore, the method for providing haptic alerts to the occupant of vehicle through the seat belt includes sensing an event by at least an on-board event capturing device, of an event capturing module of the vehicle and communicating the event to a haptic controller. Once the event is captured, the unique haptic sequence corresponding to the event is selected by the haptic controller. The captured haptic sequence is transmitted to unobtrusive and wear-resistant haptic actuators and an array of such haptic actuators with haptic drivers that are connected to at least an electrically insulated substrate with power lines and communication lines, where at least the electrically insulated substrate is disposed in at least the vibration-enhancing haptic channel of a seat belt webbing of the seat belt. Finally, the plurality of unobtrusive and wear-resistant haptic actuators are actuated through haptic drivers, to provide haptic alerts to the occupant based on the selected haptic sequence.

The haptic sequences for providing haptic alerts include the step of actuating the plurality of unobtrusive and wear-resistant haptic actuators or the array of unobtrusive and wear-resistant haptic actuators, with haptic sequences and providing haptic alerts based on the haptic sequences, to the occupant by means of the vibration-enhancing haptic channel and the inner portions of the first or second top surfaces of the seat belt webbing.

The haptic sequences for providing haptic alerts also include, actuating the plurality of unobtrusive and wear-resistant and the array of unobtrusive and wear-resistant haptic actuators with haptic sequences and providing haptic alerts based on the haptic sequences, to the occupant by means of the vibration-enhancing haptic channel and the inner portions of the first and second top surfaces of the seat belt webbing;

The haptic sequences for providing haptic alerts further include the step of actuating the plurality of unobtrusive and wear-resistant haptic actuators and the array of unobtrusive and wear-resistant haptic actuators, in a unidirectional or bidirectional sequence and providing haptic alerts to the occupant by means of the vibration-enhancing haptic channel and the inner portions of the first and second top surfaces of the seat belt webbing.

The haptic sequences for providing haptic alerts further include the step of actuating the plurality of the array of unobtrusive and wear-resistant haptic actuators, at desired locations of the seat belt, and providing haptic alerts to the left or right lap portions of the occupant based on the haptic sequences, by means of the vibration-enhancing haptic channel and the inner portions of the first and second top surfaces of the seat belt webbing.

### Advantages of the present invention

The seat belt webbing of the present invention offers protection against the wear/tear of unobtrusive haptic actuators, as they are provides inside the seat belt webbing.

The seat belt webbing of the present invention provides stronger vibrations, even without using non-motor based actuators, to the thoracic or pelvic regions of the occupant. In other words, the seat belt system of the present invention provides a direct haptic warning to the thoracic and pelvic regions of the occupant.

The unobtrusive haptic actuators of the seat belt of the present invention can be used individually or as an array.

The seat belt system of the present invention can also be used in addition to the prevailing audio-based alert systems in an automotive vehicle.

The seat belt webbing of the present invention will have different sequences to differentiate various warnings and alerts.

It is understood that the invention is not limited to the particular construction, arrangement of parts and particular implementation herein illustrated and described, but embraces all such modified forms thereof as come within the scope of the following claims.

## Claims

1. A seat belt (104) for an occupant (101) of a vehicle (100), comprising:
a seat belt webbing (110) with first and second surfaces (113, 114) is disposed to be in physical contact with the occupant (101) of the vehicle (100); **characterized in that**
a vibration-enhancing haptic channel (115) is disposed in between the first and second top surfaces (113, 114);
an electrically insulated substrate (116) configured with power lines (117) and communication lines (118), is disposed inside the vibration-enhancing haptic channel (115); and
plurality of unobtrusive and wear-resistant haptic actuators (120) with haptic drivers (121) are connected to the power lines (117) and communication lines (118) of the electrically insulated substrate (116) and disposed to be in haptic communication with inner portions of the first or second top surface (113, 114) of the seat belt webbing (110), through the vibration-enhancing haptic channel (115).

2. The seat belt (104) as claimed in claim 1, wherein the vibration enhancing haptic channel (115) is coated with a piezo electric or piezo ceramic material, preferably perovskites and connected to the power lines (117).

3. The seat belt (104) as claimed in claim 1, wherein the unobtrusive and wear-resistant haptic actuators (120) along with haptic drivers (121) are mounted on either side of the electrically insulated substrate (116) and are adapted to be in haptic communication with the first and second surfaces (113, 114) of the seat belt webbing (110), through the vibration-enhancing haptic channel (115).

4. The seat belt (104) as claimed in claim 1, wherein an array of unobtrusive and wear-resistant haptic actuators (124) along with haptic driver (121) is disposed along with the unobtrusive and wear-resistant haptic actuators (120), on either side or one side of the electrically insulated substrate (116).

5. The seat belt (104) as claimed in claim 1, wherein an unobtrusive and wear-resistant haptic actuator along with a haptic driver (121) is connected to the power lines (117) and communication lines (118) of the electrically insulated substrate (116) and disposed to be in haptic communication with inner portions of the first or second top surface (113, 114) of the seat belt webbing (110), through the vibration-enhancing haptic channel (115).

6. The seat belt (104) as claimed in claim 1, wherein a pair of independent vibration-enhancing haptic channels (122a, 122b) are disposed in between the first and second surfaces (113, 114) of the seat belt webbing (110), along with the unobtrusive and wear-resistant haptic actuators (120) and with haptic drivers (121) connected to the electrically insulated substrates (124).

7. The seat belt (104) as claimed in claim 6, wherein an array of unobtrusive and wear-resistant haptic actuators (124) is disposed along with the unobtrusive haptic actuators (120).

8. A seat belt system (226) for providing a haptic alerts to an occupant (101) of a vehicle (100), comprising:
a seat belt webbing (110) with first and second surfaces (113, 114), is disposed to be in physical contact with the occupant (101) of the vehicle (100); **characterized in that**
a vibration-enhancing haptic channel (115) is disposed in between the first and second top surfaces (113, 114);
an electrically insulated substrate (116) configured with power lines (217) and communication lines (218) is disposed inside the vibration-enhancing haptic channel (115);
plurality of unobtrusive and wear-resistant haptic actuators (220) with haptic drivers (221) are connected to the power lines (217) and communication lines (218) of the electrically insulated substrate (116) and disposed to be in haptic communication with inner portions of the first or second top surface (113, 114) of the seat belt webbing (110), through the vibration-enhancing haptic channel (115);
an on-board event capturing module (227) with on-board event capturing members (202a, 202b, 202c, 202d), is disposed to capture and communicate event alerts; and
a haptic controller (230) is disposed to receive the event alerts from the on-board event capturing members (202a, 202b, 202c, 202d), process the event alerts, select haptic sequences corresponding to the event alerts from a database (231), actuate the unobtrusive and wear-resistant haptic actuators (220) and the array of unobtrusive and wear-resistant haptic actuators (224), through haptic drivers (221) and to provide haptic alerts to the occupant (101), based on the haptic sequences.

9. The seat belt system (226) as claimed in claim 8, wherein the vibration-enhancing haptic channel (115) is coated with a piezo electric or piezo ceramic material, preferably perovskites and connected to the power lines (217).

10. The seat belt system (226) as claimed in claim 8, wherein the unobtrusive and wear-resistant haptic actuators (220) are mounted on either side of the electrically insulated substrate (116) and are adapted to be in haptic communication with the first and second surfaces (113, 114) of the seat belt webbing (110), through the vibration-enhancing haptic channel (115).

11. The seat belt system (226) as claimed in claim 8, wherein an array of unobtrusive and wear-resistant haptic actuators (224) is disposed along with the unobtrusive and wear-resistant haptic actuators (220), on either side or one side of the electrically insulated substrate (116).

12. The seat belt system (226) as claimed in claim 8, wherein a pair of independent vibration-enhancing haptic channels (122a, 122b) are disposed in between the first and second surfaces (113, 114) of the seat belt webbing (110), along with the unobtrusive and wear-resistant haptic actuators (220) that are mounted on the electrically insulated substrates (123a, 123b) and connected to the electrically insulated substrates (116).

13. The seat belt system (226) as claimed in claim 12, wherein an array of unobtrusive and wear-resistant haptic actuators (224) is disposed along with the unobtrusive and wear-resistant haptic actuators (220).

14. A method for providing haptic alerts to an occupant of a vehicle through a seat belt (104), the method comprising:
(i) sensing an event by at least an on-board event capturing device, of an event capturing module of the vehicle (100) and communicating the event to a haptic controller (230);
(ii) selecting a unique haptic sequence corresponding to the event;
(iii) transmitting the haptic sequence to unobtrusive and wear-resistant haptic actuators (120,220,224) and an array of such haptic actuators (120,220,224) that are connected to at least an electrically insulated substrate (116,123a,123b) with power lines and communication lines (117,118), where at least the electrically insulated substrate (116,123a,123b) is disposed in at least a vibration-enhancing haptic channel (115,122a, 122b) of a seat belt webbing (110) of the seat belt (104); and
(iv) actuating at least the plurality of unobtrusive and wear-resistant haptic actuators (120,220,224), to provide haptic alerts to the occupant (101) based on a haptic sequence.

15. The method as claimed in claim 14, wherein the haptic sequence of the haptic alerts includes,
(i) actuating the plurality of unobtrusive and wear-resistant haptic actuators (120,220,224) or the array of unobtrusive and wear-resistant haptic actuators (120,220,224), with haptic sequences and providing haptic alerts based on the haptic sequences, to the occupant (101) by means of the vibration-enhancing haptic channel (115,122a, 122b) and the inner portions of the first or second top surfaces of the seat belt webbing (110);
(ii) actuating the plurality of unobtrusive and wear-resistant and the array of unobtrusive and wear-resistant haptic actuators (120,220,224) with haptic sequences and providing haptic alerts based on the haptic sequences, to the occupant (101) by means of the vibration-enhancing haptic channel (115,220,224) and the inner portions of the first and second top surfaces (113,114) of the seat belt webbing (110);
(iii) actuating the plurality of unobtrusive and wear-resistant haptic actuators (120,220,224) and the array of unobtrusive and wear-resistant haptic actuators (120,220,224), in a unidirectional or bidirectional sequence and providing haptic alerts to the occupant (101) by means of the vibration-enhancing haptic channel (115,220,224) and the inner portions of the first and second top surfaces (113,114) of the seat belt webbing (110); and
(iii) actuating the plurality of the array of unobtrusive and wear-resistant haptic actuators (120,220,224), at desired locations of the seat belt (104), and providing haptic alerts to the left or right lap portions of the occupant (101) based on the haptic sequences, by means of the vibration-enhancing haptic channel (115,122a, 122b) and the inner portions of the first and second top surfaces (113,114) of the seat belt webbing (110).

## Patentansprüche

1. Sicherheitsgurt (104) für einen Insassen (101) eines Fahrzeugs (100), umfassend:
ein Sicherheitsgurtband (110) mit einer ersten und einer zweiten Oberfläche (113, 114), das eingerichtet ist, um in physischem Kontakt mit dem Insassen (101) des Fahrzeugs (100) zu stehen; **dadurch gekennzeichnet, dass**
ein vibrationsverstärkender haptischer Kanal (115) zwischen der ersten und der zweiten oberen Oberfläche (113, 114) eingerichtet ist;
ein elektrisch isoliertes Substrat (116), das mit Stromleitungen (117) und Kommunikationsleitungen (118) konfiguriert ist, im Inneren des vibrationsverstärkenden haptischen Kanals (115) eingerichtet ist; und
eine Vielzahl unauffälliger und verschleißfester haptischer Betätigungselemente (120) mit haptischen Treibern (121) mit den Stromleitungen (117) und den Kommunikationsleitungen (118) des elektrisch isolierten Substrats (116) verbunden und eingerichtet sind, um, über den vibrationsverstärkenden haptischen Kanal (115), in haptischer Kommunikation mit inneren Abschnitten der ersten oder der zweiten oberen Oberfläche (113, 114) des Sicherheitsgurtbands (110) zu stehen.

2. Sicherheitsgurt (104) nach Anspruch 1, wobei der vibrationsverstärkende haptische Kanal (115) mit einem piezoelektrischen oder piezokeramischen Material, vorzugsweise Perowskiten, beschichtet und mit den Stromleitungen (117) verbunden ist.

3. Sicherheitsgurt (104) nach Anspruch 1, wobei die unauffälligen und verschleißfesten haptischen Betätigungselemente (120) zusammen mit haptischen Treibern (121) auf beiden Seiten des elektrisch isolierten Substrats (116) montiert sind und angepasst sind, um, über den vibrationsverstärkenden haptischen Kanal (115), in haptischer Kommunikation mit der ersten und der zweiten Oberfläche (113, 114) des Sicherheitsgurtbands (110) zu stehen.

4. Sicherheitsgurt (104) nach Anspruch 1, wobei eine Anordnung unauffälliger und verschleißfester haptischer Betätigungselemente (124) zusammen mit dem haptischen Treiber (121) zusammen mit den unauffälligen und verschleißfesten haptischen Betätigungselementen (120) auf beiden Seiten oder einer Seite des elektrisch isolierten Substrats (116) eingerichtet ist.

5. Sicherheitsgurt (104) nach Anspruch 1, wobei ein unauffälliges und verschleißfestes haptisches Betätigungselement zusammen mit einem haptischen Treiber (121) mit den Stromleitungen (117) und Kommunikationsleitungen (118) des elektrisch isolierten Substrats (116) verbunden und eingerichtet ist, um, über den vibrationsverstärkenden haptischen Kanal (115), in haptischer Kommunikation mit inneren Abschnitten der ersten oder der zweiten oberen Oberfläche (113, 114) des Sicherheitsgurtbands (110) zu stehen.

6. Sicherheitsgurt (104) nach Anspruch 1, wobei ein Paar unabhängiger vibrationsverstärkender haptischer Kanäle (122a, 122b) zwischen der ersten und der zweiten Oberfläche (113, 114) des Sicherheitsgurtbands (110) eingerichtet sind, zusammen mit den unauffälligen und verschleißfesten haptischen Betätigungselementen (120) und mit haptischen Treibern (121), die mit den elektrisch isolierten Substraten (124) verbunden sind.

7. Sicherheitsgurt (104) nach Anspruch 6, wobei eine Anordnung unauffälliger und verschleißfester haptischer Betätigungselemente (124) zusammen mit den unauffälligen haptischen Betätigungselementen (120) eingerichtet ist.

8. Sicherheitsgurtsystem (226) zum Bereitstellen haptischer Warnungen für einen Insassen (101) eines Fahrzeugs (100), umfassend:
ein Sicherheitsgurtband (110) mit einer ersten und einer zweiten Oberfläche (113, 114), das eingerichtet ist, um in physischem Kontakt mit dem Insassen (101) des Fahrzeugs (100) zu stehen; **dadurch gekennzeichnet, dass**
ein vibrationsverstärkender haptischer Kanal (115) zwischen der ersten und der zweiten oberen Oberfläche (113, 114) eingerichtet ist;
ein elektrisch isoliertes Substrat (116), das mit Stromleitungen (217) und Kommunikationsleitungen (218) konfiguriert ist, im Inneren des vibrationsverstärkenden haptischen Kanals (115) eingerichtet ist;
die Vielzahl unauffälliger und verschleißfester haptischer Betätigungselementen (220) mit haptischen Treibern (221) mit den Stromleitungen (217) und Kommunikationsleitungen (218) des elektrisch isolierten Substrats (116) verbunden und eingerichtet sind, um, über den vibrationsverstärkenden haptischen Kanal (115), in haptischer Kommunikation mit inneren Abschnitten der ersten oder der zweiten oberen Oberfläche (113, 114) des Sicherheitsgurtbands (110) zu stehen;
ein integriertes Ereigniserfassungsmodul (227) mit integrierten Ereigniserfassungsgliedern (202a, 202b, 202c, 202d) eingerichtet ist, um Ereigniswarnungen zu erfassen und zu kommunizieren; und
eine haptische Steuerung (230) eingerichtet ist, um die Ereigniswarnungen von den integrierten Ereigniserfassungsgliedern (202a, 202b, 202c, 202d) zu empfangen, die Ereigniswarnungen zu verarbeiten, haptische Sequenzen, die den Ereigniswarnungen entsprechen, aus einer Datenbank (231) auszuwählen, die unauffälligen und verschleißfesten haptischen Betätigungselemente (220) und die Anordnung unauffälliger und verschleißfester haptischer Betätigungselemente (224), über haptische Treiber (221), zu betätigen und um, basierend auf den haptischen Sequenzen, haptische Warnungen für den Insassen (101) bereitzustellen.

9. Sicherheitsgurtsystem (226) nach Anspruch 8, wobei der vibrationsverstärkende haptische Kanal (115) mit einem piezoelektrischen oder piezokeramischen Material, vorzugsweise Perowskiten, beschichtet und mit den Stromleitungen (217) verbunden ist.

10. Sicherheitsgurtsystem (226) nach Anspruch 8, wobei die unauffälligen und verschleißfesten haptischen Betätigungselemente (220) auf beiden Seiten des elektrisch isolierten Substrats (116) montiert sind und angepasst sind, um, über den vibrationsverstärkenden haptischen Kanal (115), in haptischer Kommunikation mit der ersten und der zweiten Oberfläche (113, 114) des Sicherheitsgurtbands (110) zu stehen.

11. Sicherheitsgurtsystem (226) nach Anspruch 8, wobei eine Anordnung unauffälliger und verschleißfester haptischer Betätigungselemente (224) zusammen mit den unauffälligen und verschleißfesten haptischen Betätigungselementen (220) auf beiden Seiten oder einer Seite des elektrisch isolierten Substrats (116) eingerichtet ist.

12. Sicherheitsgurtsystem (226) nach Anspruch 8, wobei ein Paar unabhängiger vibrationsverstärkender haptischer Kanäle (122a, 122b) zwischen der ersten und der zweiten Oberfläche (113, 114) des Sicherheitsgurtbands (110) eingerichtet sind, zusammen mit den unauffälligen und verschleißfesten haptischen Betätigungselementen (220), die an den elektrisch isolierten Substraten (123a, 123b) montiert und mit den elektrisch isolierten Substraten (116) verbunden sind.

13. Sicherheitsgurtsystem (226) nach Anspruch 12, wobei eine Anordnung unauffälliger und verschleißfester haptischer Betätigungselemente (224) zusammen mit den unauffälligen und verschleißfesten haptischen Betätigungselementen (220) eingerichtet ist.

14. Verfahren zum Bereitstellen haptischer Warnungen für einen Insassen eines Fahrzeugs über einen Sicherheitsgurt (104), das Verfahren umfassend:
(i) Erkennen eines Ereignisses durch mindestens eine integrierte Ereigniserfassungsvorrichtung eines Ereigniserfassungsmoduls des Fahrzeugs (100) und Kommunizieren des Ereignisses an eine haptische Steuerung (230);
(ii) Auswählen einer einzigartigen haptischen Sequenz, die dem Ereignis entspricht;
(iii) Übertragen der haptischen Sequenz an unauffällige und verschleißfeste haptische Betätigungselemente (120,220,224) und eine Anordnung derartiger haptischer Betätigungselemente (120,220,224), die mit Stromleitungen und Kommunikationsleitungen (117,118) mit mindestens einem elektrisch isolierten Substrat (116,123a,123b) verbunden sind, wobei mindestens das elektrisch isolierte Substrat (116,123a,123b) in mindestens einem vibrationsverstärkenden haptischen Kanal (115,122a, 122b) eines Sicherheitsgurtbands (110) des Sicherheitsgurts (104) eingerichtet ist; und
(iv) Betätigen von mindestens der Vielzahl unauffälliger und verschleißfester haptischer Betätigungselemente (120,220,224), um basierend auf einer haptischen Sequenz haptische Warnungen für den Insassen (101) bereitzustellen.

15. Verfahren nach Anspruch 14, wobei die haptische Sequenz der haptischen Warnungen einschließt
(i) Betätigen der Vielzahl unauffälliger und verschleißfester haptischer Betätigungselemente (120,220,224) oder der Anordnung unauffälliger und verschleißfester haptischer Betätigungselemente (120,220,224) mit haptischen Sequenzen und Bereitstellen haptischer Warnungen basierend auf den haptischen Sequenzen für den Insassen (101) mittels des vibrationsverstärkenden haptischen Kanals (115,122a, 122b) und der inneren Abschnitte der ersten oder der zweiten oberen Oberfläche des Sicherheitsgurtbands (110);
(ii) Betätigen der Vielzahl unauffälliger und verschleißfester und der Anordnung unauffälliger und verschleißfester haptischer Betätigungselemente (120,220,224) mit haptischen Sequenzen und Bereitstellen haptischer Warnungen basierend auf den haptischen Sequenzen für den Insassen (101) mittels des vibrationsverstärkenden haptischen Kanals (115,220,224) und der inneren Abschnitte der ersten und der zweiten oberen Oberfläche (113,114) des Sicherheitsgurtbands (110);
(iii) Betätigen der Vielzahl unauffälliger und verschleißfester haptischer Betätigungselemente (120,220,224) und der Anordnung unauffälliger und verschleißfester haptischer Betätigungselemente (120,220,224) in einer unidirektionalen oder bidirektionalen Sequenz und Bereitstellen haptischer Warnungen für den Insassen (101) mittels des vibrationsverstärkenden haptischen Kanals (115,220,224) und der inneren Abschnitte der ersten und der zweiten oberen Oberfläche (113,114) des Sicherheitsgurtbands (110); und
(iii) Betätigen der Vielzahl der Anordnung unauffälliger und verschleißfester haptischer Betätigungselemente (120,220,224), an gewünschten Stellen des Sicherheitsgurts (104), und Bereitstellen haptischer Warnungen für den linken oder den rechten Beckenabschnitt des Insassen (101) basierend auf den haptischen Sequenzen mittels des vibrationsverstärkenden haptischen Kanals (115,122a, 122b) und der inneren Abschnitte der ersten und der zweiten oberen Oberfläche (113,114) des Sicherheitsgurtbands (110).

## Revendications

1. Ceinture de sécurité (104) destinée à un occupant (101) d'un véhicule (100), comprenant :
une sangle de ceinture de sécurité (110) avec des première et seconde surfaces (113, 114) est disposée pour être en contact physique avec l'occupant (101) du véhicule (100) ; **caractérisé en ce que**
un canal haptique de renforcement de vibrations (115) est disposé entre les première et seconde surfaces supérieures (113, 114) ;
un substrat électriquement isolé (116) configuré avec des lignes d'alimentation (117) et des lignes de communication (118), est disposé à l'intérieur du canal haptique de renforcement de vibrations (115) ; et
une pluralité d'actionneurs haptiques (120) discrets et résistants à l'usure avec des dispositifs de pilotage haptiques (121) sont connectés aux lignes d'alimentation (117) et aux lignes de communication (118) du substrat électriquement isolé (116) et disposés pour être en communication haptique avec des parties internes de la première ou seconde surface supérieure (113, 114) de la sangle de ceinture de sécurité (110), par le biais du canal haptique de renforcement de vibrations (115).

2. Ceinture de sécurité (104) selon la revendication 1, dans laquelle le canal haptique de renforcement de vibrations (115) est revêtu d'un matériau piézoélectrique ou piézocéramique, de préférence des pérovskites et connecté aux lignes d'alimentation (117).

3. Ceinture de sécurité (104) selon la revendication 1, dans laquelle les actionneurs haptiques (120) discrets et résistants à l'usure accompagnés des dispositifs de pilotage haptiques (121) sont montés de chaque côté du substrat électriquement isolé (116) et sont conçus pour être en communication haptique avec les première et seconde surfaces (113, 114) de la sangle de ceinture de sécurité (110), par le biais du canal haptique de renforcement de vibrations (115).

4. Ceinture de sécurité (104) selon la revendication 1, dans laquelle un réseau d'actionneurs haptiques (124) discrets et résistants à l'usure accompagnés d'un dispositif de pilotage haptique (121) est disposé accompagné des actionneurs haptiques (120) discrets et résistants à l'usure, de chaque côté ou sur un côté du substrat électriquement isolé (116).

5. Ceinture de sécurité (104) selon la revendication 1, dans laquelle un actionneur haptique discret et résistant à l'usure accompagné d'un dispositif de pilotage haptique (121) est connecté aux lignes d'alimentation (117) et aux lignes de communication (118) du substrat électriquement isolé (116) et disposé pour être en communication haptique avec des parties internes de la première ou seconde surface supérieure (113, 114) de la sangle de ceinture de sécurité (110), par le biais du canal haptique de renforcement de vibrations (115).

6. Ceinture de sécurité (104) selon la revendication 1, dans laquelle une paire de canaux haptiques de renforcement de vibrations (122a, 122b) indépendants sont disposés entre les première et seconde surfaces (113, 114) de la sangle de ceinture de sécurité (110), accompagnés des actionneurs haptiques (120) discrets et résistants à l'usure et de dispositifs de pilotage haptiques (121) connectés aux substrats électriquement isolés (124).

7. Ceinture de sécurité (104) selon la revendication 6, dans laquelle un réseau d'actionneurs haptiques (124) discrets et résistants à l'usure est disposé accompagné des actionneurs haptiques (120) discrets.

8. Système de ceinture de sécurité (226) permettant de fournir une alerte haptique à un occupant (101) d'un véhicule (100), comprenant :
une sangle de ceinture de sécurité (110) avec des première et seconde surfaces (113, 114), est disposée pour être en contact physique avec l'occupant (101) du véhicule (100) ; **caractérisé en ce que**
un canal haptique de renforcement de vibrations (115) est disposé entre les première et seconde surfaces supérieures (113, 114) ;
un substrat électriquement isolé (116) configuré avec des lignes d'alimentation (217) et des lignes de communication (218), est disposé à l'intérieur du canal haptique de renforcement de vibrations (115) ;
une pluralité d'actionneurs haptiques (220) discrets et résistants à l'usure avec des dispositifs de pilotage haptiques (221) sont connectés aux lignes d'alimentation (217) et aux lignes de communication (218) du substrat électriquement isolé (116) et disposés pour être en communication haptique avec des parties internes de la première ou seconde surface supérieure (113, 114) de la sangle de ceinture de sécurité (110), par le biais du canal haptique de renforcement de vibrations (115) ;
un module de capture d'événement embarqué (227) avec des éléments de capture d'événement embarqués (202a, 202b, 202c, 202d), est disposé pour capturer et communiquer des alertes d'événement ; et
un contrôleur haptique (230) est disposé pour recevoir les alertes d'événement en provenance des éléments de capture d'événement embarqués (202a, 202b, 202c, 202d), traiter les alertes d'événement, sélectionner des séquences haptiques correspondant aux alertes d'événement dans une base de données (231), actionner les actionneurs haptiques (220) discrets et résistants à l'usure et le réseau d'actionneurs haptiques (224) discrets et résistants à l'usure, par le biais de dispositifs de pilotage haptiques (221) et pour fournir des alertes haptiques à l'occupant (101), en fonction des séquences haptiques.

9. Système de ceinture de sécurité (226) selon la revendication 8, dans lequel le canal haptique de renforcement de vibrations (115) est revêtu d'un matériau piézoélectrique ou piézocéramique, de préférence des pérovskites et connecté aux lignes d'alimentation (217).

10. Système de ceinture de sécurité (226) selon la revendication 8, dans lequel les actionneurs haptiques (220) discrets et résistants à l'usure sont montés de chaque côté du substrat électriquement isolé (116) et sont conçus pour être en communication haptique avec les première et seconde surfaces (113, 114) de la sangle de ceinture de sécurité (110), par le biais du canal haptique de renforcement de vibrations (115).

11. Système de ceinture de sécurité (226) selon la revendication 8, dans lequel un réseau d'actionneurs haptiques (224) discrets et résistants à l'usure est disposé accompagné des actionneurs haptiques (220) discrets et résistants à l'usure, de chaque côté ou sur un côté du substrat électriquement isolé (116).

12. Système de ceinture de sécurité (226) selon la revendication 8, dans lequel une paire de canaux haptiques de renforcement de vibrations (122a, 122b) indépendants sont disposés entre les première et seconde surfaces (113, 114) de la sangle de ceinture de sécurité (110), accompagnés des actionneurs haptiques (220) discrets et résistants à l'usure qui sont montés sur les substrats électriquement isolés (123a, 123b) et connectés aux substrats électriquement isolés (116).

13. Système de ceinture de sécurité (226) selon la revendication 12, dans lequel un réseau d'actionneurs haptiques (224) discrets et résistants à l'usure est disposé accompagné des actionneurs haptiques (220) discrets et résistants à l'usure.

14. Procédé permettant de fournir des alertes haptiques à un occupant d'un véhicule par le biais d'une ceinture de sécurité (104), le procédé comprenant :
(i) la détection d'un événement par au moins un dispositif de capture d'événement embarqué, d'un module de capture d'événement du véhicule (100) et la communication de l'événement à un contrôleur haptique (230) ;
(ii) la sélection d'une séquence haptique unique correspondant à l'événement ;
(iii) la transmission de la séquence haptique à des actionneurs haptiques (120, 220, 224) discrets et résistants à l'usure et à un réseau de tels actionneurs haptiques (120, 220, 224) qui sont connectés à au moins un substrat électriquement isolé (116, 123a, 123b) avec des lignes d'alimentation et des lignes de communication (117, 118), où au moins le substrat électriquement isolé (116, 123a, 123b) est disposé dans au moins un canal haptique de renforcement de vibrations (115, 122a, 122b) d'une sangle de ceinture de sécurité (110) de la ceinture de sécurité (104) ; et
(iv) l'actionnement au moins de la pluralité d'actionneurs haptiques (120, 220, 224) discrets et résistants à l'usure, pour fournir des alertes haptiques à l'occupant (101) en fonction d'une séquence haptique.

15. Procédé selon la revendication 14, dans lequel la séquence haptique des alertes haptiques comporte,
(i) l'actionnement de la pluralité d'actionneurs haptiques (120, 220, 224) discrets et résistants à l'usure ou du réseau d'actionneurs haptiques (120, 220, 224) discrets et résistants à l'usure, avec des séquences haptiques et la fourniture d'alertes haptiques en fonction des séquences haptiques, à l'occupant (101) au moyen du canal haptique de renforcement de vibrations (115, 122a, 122b) et des parties internes de la première ou seconde surface supérieure de la sangle de ceinture de sécurité (110) ;
(ii) l'actionnement de la pluralité et du réseau d'actionneurs haptiques (120, 220, 224) discrets et résistants à l'usure avec des séquences haptiques et la fourniture d'alertes haptiques en fonction des séquences haptiques, à l'occupant (101) au moyen du canal haptique de renforcement de vibrations (115, 220, 224) et des parties internes des première et seconde surfaces supérieures (113, 114) de la sangle de ceinture de sécurité (110) ;
(iii) l'actionnement de la pluralité d'actionneurs haptiques (120, 220, 224) discrets et résistants à l'usure et du réseau d'actionneurs haptiques (120, 220, 224) discrets et résistants à l'usure, dans une séquence unidirectionnelle ou bidirectionnelle et la fourniture d'alertes haptiques à l'occupant (101) au moyen du canal haptique de renforcement de vibrations (115, 220, 224) et des parties internes des première et seconde surfaces supérieures (113, 114) de la sangle de ceinture de sécurité (110) ; et
(iii) l'actionnement de la pluralité du réseau d'actionneurs haptiques (120, 220, 224) discrets et résistants à l'usure, au niveau de localisations souhaitées de la ceinture de sécurité (104), et la fourniture d'alertes haptiques aux parties de chevauchement gauche ou droite de l'occupant (101) en fonction des séquences haptiques, au moyen du canal haptique de renforcement de vibrations (115, 122a, 122b) et des parties internes des première et seconde surfaces supérieures (113, 114) de la sangle de ceinture de sécurité (110).
